**Europäisches Patentamt**

**European Patent Office**

**Office européen des brevets**

(11) Numéro de publication: **0 192 939**
**B1**

# FASCICULE DE BREVET EUROPEEN

(45) Date de publication du fascicule du brevet:
07.12.88

(51) Int. Cl.⁴: **B 60 B 21/12**

(21) Numéro de dépôt: 86100457.0

(22) Date de dépôt: 15.01.86

(54) **Flap pour pneumatiques.**

(30) Priorité: 29.01.85 FR 8501524

(43) Date de publication de la demande:
03.09.86 Bulletin 86/36

(45) Mention de la délivrance du brevet:
07.12.88 Bulletin 88/49

(84) Etats contractants désignés:
AT BE CH DE FR GB IT LI LU NL SE

(56) Documents cités:
FR-A- 1 418 481
US-A- 1 475 147
US-A- 4 063 584

(73) Titulaire: MICHELIN & CIE (Compagnie Générale des Etablissements Michelin) Société dite:, 4 rue du Terrail, F-63000 Clermont-Ferrand (FR)

(72) Inventeur: Berillon, Jean-Bernard, Chemin de la Vallée de Préguille, F-63122 Ceyrat (FR)
Inventeur: Daulon, Jean-Marc, 20 rue du Terme St-Hippolyte, F-63140 Chatel-Guyon (FR)
Inventeur: Maurel, Jean-Philippe, 15 avenue Carnot, F-63000 Clermont-Ferrand (FR)

(74) Mandataire: Renaudie, Jacques et al, Michelin & Cie Service K. Brevets, F-63040 Clermont-Ferrand Cédex (FR)

Description

La présente invention se rapporte à des perfectionnements aux flaps utilisés dans les ensembles pneumatiques pour véhicules lourds. Plus particulièrement, elle concerne la forme générale desdits flaps.

Les pneumatiques pour véhicules lourds, comme par exemple les poids-lourds, utilisés avec une chambre à air requièrent l'emploi d'un flap. Comme on le sait, un flap est un anneau de protection interposé entre, de l'un de ses côtés, la chambre à air et, de l'autre de ses côtés, la jante et les bourrelets du pneumatique monté sur ladite jante. La section radiale d'un flap a la forme générale d'un U, dont la partie centrale s'applique sur la jante et les ailes latérales sur les bourrelets. Le flap évite le pincement de la chambre à air entre la jante et les bourrelets et protège ladite chambre du contact avec la jante qui peut être considérablement échauffée par le fonctionnement des freins.

Les flaps connus n'assurent cependant qu'une protection insuffisante à la chambre à air dont on constate fréquemment la rupture, même après un usage assez court, dans la zone où elle quitte le flap pour s'appuyer sur le pneumatique. Afin d'améliorer le comportement en fatigue de cette zone critique des chambres à air, le brevet US 4 063 584 a proposé de déterminer la hauteur radiale des ailes d'un flap en fonction de la hauteur du rebord de la jante avec laquelle il est employé. Outre le fait qu'il n'est pas très commode de devoir utiliser des flaps différents selon la hauteur du rebord de jante utilisé, cette disposition s'avère insuffisante pour empêcher les ruptures de chambre à air dans la zone critique indiquée ci-dessus. Du US-A-1 475 147 est connu un flap selon le préambule de la revendication 1.

L'objectif de la présente invention est de proposer un flap qui protège efficacement la chambre à air sans introduire de nouveaux inconvénients.

Le flap selon la présente invention, comportant une partie centrale sensiblement cylindrique/destinée à être appliquée sur le fond d'une jante, et deux ailes latérales destinées à être appliquées sur la paroi intérieure des bourrelets d'un pneumatique, inclinées approximativement comme ladite paroi intérieure, chaque aile latérale étant terminée, radialement vers l'extérieur, par un prolongement qui, à l'état libre de toute contrainte, est incliné par rapport à l'aile adjacente et qui est contre le pneumatique lorsque la pression dans la chambre à air s'élève, est caractérisé en ce que ledit prolongement s'éloigne axialement vers l'intérieur de ladite paroi intérieure du pneumatique, de sorte que, au début du gonflage, la chambre à air fasse saillie à l'intérieur de la cavité gonflable lorsqu'elle vient au contact avec l'extrémité radialement extérieure dudit prolongement.

L'invention sera parfaitement comprise à l'aide d'un exemple de réalisation qui va maintenant être décrit en référence avec les dessins annexés, dans lesquels:

La figure 1 est une section radiale d'un flap selon l'invention,

Les figures 2, 3 et 4 représentent le montage d'un flap selon l'invention.

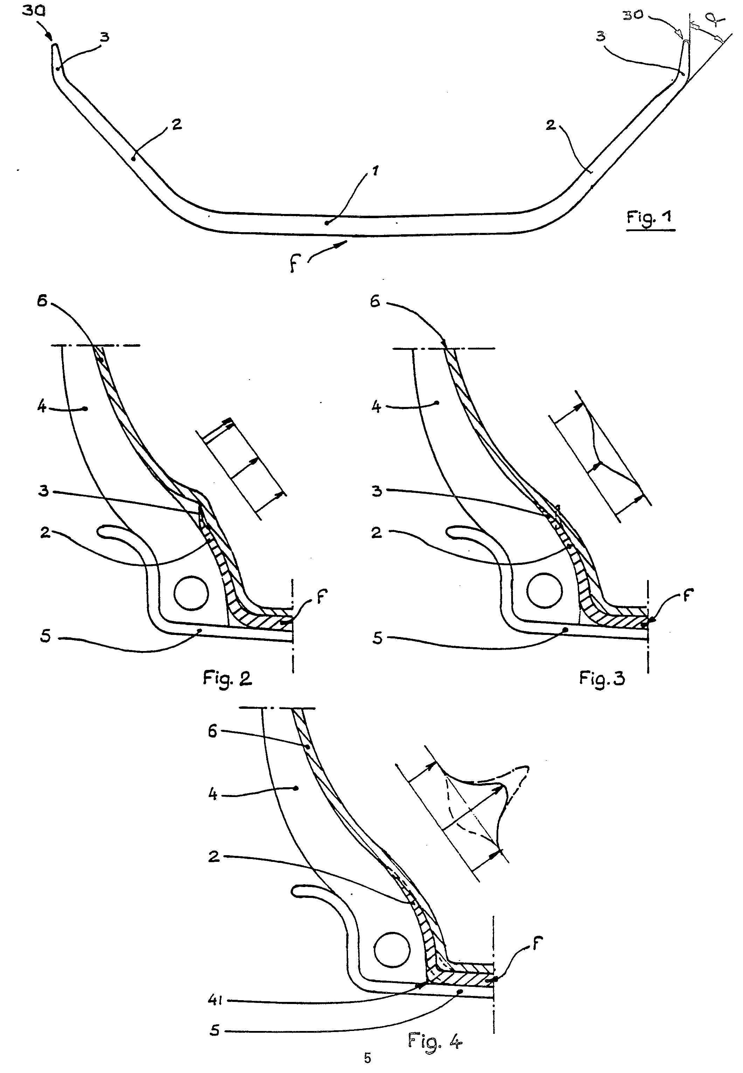

Le flap, vu en section à la figure 1, comporte une partie centrale 1 sensiblement cylindrique destinée à protéger la chambre à air du contact avec la jante, ainsi que deux ailes latérales 2 inclinées. Lorsqu'on incorpore un flap dans un pneumatique, ces ailes latérales 2 s'appliquent sur la paroi intérieure des bourrelets. Selon l'invention, chaque aile latérale 2 est terminée par un prolongement 3. A l'état libre de toute contrainte, c'est-à-dire lorsque le flap est monté dans le pneumatique mais que la chambre à air n'est pas gonflée, ledit prolongement s'éloigne axialement de la paroi intérieure du bourrelet du pneumatique avec lequel le flap est utilisé. De manière avantageuse, ce prolongement 3 est incliné d'un angle d'environ 40° par rapport à l'aile latérale 2 adjacente. De préférence, l'extrémité radialement extérieure 30 dudit prolongement 3 est arrondie. Le rayon de l'arrondi est avantageusement compris entre 0.1 et 0.6 mm. A cette fin, lorsque le flap est produit par moulage, il n'y a pas de joint entre les pièces du moule à cet endroit, afin d'éviter toute bavure de moulage à cette extrémité radialement extérieure. De préférence, le joint entre les pièces du moule est reporté plus bas (radialement) sur la face axialement extérieure du flap.

Aux figures 2 et suivantes, on a représenté partiellement un ensemble pneumatique à différents stades du montage. On y voit un bourrelet 4 de pneumatique, une jante 5, une chambre à air 6, un flap f, et chaque fois un graphique représentant le taux d'allongement de la chambre à air 6 en fonction de l'abscisse curviligne considérée le long de la section radiale de ladite chambre à air 6.

La figure 2 représente la configuration de l'ensemble pneumatique lorsque la chambre à air se trouve à une pression un peu supérieure à la pression atmosphérique, juste suffisante pour que la chambre à air soit venue en contact avec les ailes latérales 2 du flap f, ainsi qu'avec le pneumatique. Du fait de la présence du prolongement 3 qui, selon l'invention, fait saillie à l'intérieur de la cavité gonflable du pneumatique, la chambre à air 6 fait elle-même saillie. Autrement dit, à l'endroit du prolongement 3, la chambre à air 6 se développe sur une longueur plus grande que la longueur projetée sur la paroi interne du bourrelet 4. Cependant, cette déformation imposée à la chambre à air 6 au cours du gonflage se fait avec un taux d'allongement sensiblement constant. Cela est illustré sur le graphique.

La figure 3 représente la configuration de l'ensemble pneumatique à une pression un peu plus élevée, suffisante pour plaquer le prolongement 3, sur la paroi intérieure du bourrelet 4. On a rappelé en traits interrompus la situation précédente. Lorsque la pression de gonflage plaque la chambre à air 6 contre le pneumatique, cela provoque une diminution du taux d'allongement de la chambre à air 6 dans la zone voisine du prolongement 3. En effet, la longueur projetée sur la paroi intérieure du bourrelet est plus faible que la longueur dévelopée initiale de la chambre à air 6.

Enfin, la figure 4 représente la configuration de l'ensemble pneumatique à la pression nominale. On a rappelé la situation intermédiaire en traits interrompus. Au cours du gonflage final, sous l'effet de la pression importante, les ailes latérales 2 peuvent glisser radialement vers l'intérieur parce que le flap f, qui est relativement inextensible (par rapport à la chambre à air 6), s'applique fermement contre le bourrelet 4 et la jante 5, faisant ainsi disparaître un espace resté libre à côté de la pointe 41 du bourrelet. Cette mise en place finale se produit d'une manière similaire pour la plupart des types de flap. Elle s'accompagne toujours d'un allongement important de la chambre à air 6 dans une zone critique située dans le voisinage de l'extrémité radialement extérieure des ailes 3 du flap f. Cependant, grâce aux prolongements 30 du flap f selon l'invention, dont le rôle en début de gonflage vient d'être expliqué, la chambre à air 6 dispose d'une réserve d'allongement dans cette zone critique. En effet, le taux d'allongement a diminué au cours de la phase intermédiaire pendant laquelle le prolongement 3 a été plaqué contre le pneumatique. Grâce à cela, le taux d'allongement final représenté sur le graphique est bien inférieur aux taux d'allongement observés lorsque l'on utilise un flap usuel (taux que l'on a représenté en traits d'axe sur le graphique des taux d'allongement). Grâce à cela, la chambre à air travaille en service à un niveau de contrainte plus faible, ce qui est très favorable à sa durée de vie.

## Revendications

1. Flap (f) pour pneumatiques, comportant une partie centrale (1) sensiblement cylindrique destinée à être appliquée sur le fond d'une jante (5), et deux ailes latérales (2) destinées à être appliquées sur la paroi intérieure des bourrelets (4) d'un pneumatique, inclinées approximativement comme ladite paroi intérieure, chaque aile latérale étant terminée, radialement vers l'extérieur, par un prolongement (3) qui, à l'état libre de toute contrainte, est incliné par rapport à l'aile adjacente (2) et qui est plaqué contre le pneumatique lorsque la pression dans la chambre à air (6) s'élève caractérisé en ce que ledit prolongement (3) s'éloigne axialement vers l'intérieur de ladite paroi intérieure du pneumatique, de sorte que, au début du gonflage, la chambre à air (6) fasse saillie à l'intérieur de la cavité gonflable lorsqu'elle vient au contact avec l'extrémité radialement extérieure (30) dudit prolongement.

2. Flap selon la revendication 1, caractérisé en ce que ladite extrémité radialement extérieure (30) dudit prolongement (3) est arrondie.

3. Flap selon la revendication 2, caractérisé en ce que le rayon de l'arrondi de ladite extrémité radialement extérieure (30) est compris entre 0.1 et 0.6 mm.

4. Flap selon l'une des revendications 1 ou 3, caractérisé en ce que ledit prolongement (3) est incliné d'un angle d'environ 40° par rapport à l'aile latérale adjacente (2).

## Patentansprüche

1. Felgenband (f) für Luftreifen, welches einen im wesentlichen zylindrischen Zentralteil (1) aufweist, der dazu bestimmt ist, sich an den Grund einer Felge (5) zu pressen und zwei seitliche Flügel (2), die dazu bestimmt sind, sich gegen die Innenwand der Wulste (4) eines Luftreifens zu pressen und die etwa wie die genannte Innenwand geneigt sind, wobei jeder seitliche Flügel in einer radial nach aussen ragenden Verlängerung (3) endet, die im freien Zustand ohne jede Beanspruchung, bezüglich des benachbarten Flügels (2) geneigt ist und die gegen den Luftreifen gedrückt wird, wenn der Druck im Schlauch (6) steigt, dadurch gekennzeichnet, dass die Verlängerung (3) sich axial ins Innere von der Innenwand des Luftreifens erstreckt, derart, dass zu Beginn des Aufblasens der Schlauch (6) ins Innere des aufblasbaren Hohlraumes vorspringt, wenn er in Kontakt mit dem radial äusseren Ende (30) der genannten Verlängerung kommt.

2. Felgenband nach Anspruch 1, dadurch gekennzeichnet, dass das genannte radial äussere Ende (30) der Verlängerung (3) abgerundet ist.

3. Felgenband nach Anspruch 2, dadurch gekennzeichnet, dass der Abrundungsradius des genannten radial äusseren Endes (30) zwischen 0,1 und 0,6 mm beträgt.

4. Felgenband nach einem der Ansprüche 1 oder 3, dadurch gekennzeichnet, dass die Verlängerung (3) in einem Winkel von etwa 40° bezüglich des benachbarten seitlichen Flügels (2) geneigt ist.

## Claims

1. A flap (f) for use in a tyre to be mounted with an inner tube comprising a substantially cylindrical central portion (1) intended to be applied against the bottom of a rim (5) and two lateral wings (2) intended to be applied against the inner wall of the beads (4) of a tire and inclined approximately at the same angle as the inner wall, each lateral wing being terminated radially outwards by an extension (3) which, in stress-free conditions, is inclined with respect to the adjacent wing (2) and which is flattened against the tire when the pressure increases within the inner tube (6), characterized by the fact that said extension (3), is spaced axially inwards from the inner wall of the tyre in order that, at the beginning of the inflation procedure, the inner tube (6) forms at first a protrusion into the inside of the inflatable cavity of the tyre when coming into contact with the radially outer end (30) of said extension (3).

2. A flap according to claim 1, characterized by the fact that the extension (3) has a radially outer end (30) which is rounded.

3. A flap according to claim 2, characterized by the fact that the radius of the rounding of the radially outer end (30) is between 0.1 and 0.6 mm.

4. A flap according to either claim 1 or 3, characterized by the fact that the extension (3) is inclined at an angle of about 40° with respect to the adjacent lateral wing (2).

Fig. 1

Fig. 2

Fig. 3

Fig. 4